(19) Europäisches Patentamt
European Patent Office
Office européen des brevets

(11) EP 2 874 209 B1

(12) **EUROPEAN PATENT SPECIFICATION**

(45) Date of publication and mention
of the grant of the patent:
**27.12.2017 Bulletin 2017/52**

(51) Int Cl.:
*H01M 4/04* *(2006.01)*   *H01M 4/36* *(2006.01)*
*H01M 4/62* *(2006.01)*

(21) Application number: **13817008.9**

(22) Date of filing: **05.06.2013**

(86) International application number:
**PCT/JP2013/065605**

(87) International publication number:
**WO 2014/010341 (16.01.2014 Gazette 2014/03)**

(54) **METHOD FOR MANUFACTURING COATED ACTIVE MATERIAL**

VERFAHREN ZUR HERSTELLUNG EINES BESCHICHTETEN AKTIVMATERIALS

PROCÉDÉ DE FABRICATION DE MATÉRIAU ACTIF REVÊTU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2012 JP 2012156848**

(43) Date of publication of application:
**20.05.2015 Bulletin 2015/21**

(73) Proprietor: **Toyota Jidosha Kabushiki Kaisha
Toyota-shi, Aichi 471-8571 (JP)**

(72) Inventors:
• **IWASAKI, Masahiro
Toyota-shi, Aichi 471-8571 (JP)**
• **SUZUKI, Tomoya
Toyota-shi, Aichi 471-8571 (JP)**
• **KATO, Kazuhito
Toyota-shi, Aichi 471-8571 (JP)**

(74) Representative: **TBK
Bavariaring 4-6
80336 München (DE)**

(56) References cited:
**WO-A1-2011/105574        WO-A1-2011/105574
JP-A- 2010 040 218        JP-A- 2013 125 707
JP-B1- 5 002 824          US-A1- 2011 053 004
US-A1- 2011 065 007**

• **"THINKY - An introduction to Planetary
Centrifugal Mixers", , 1 September 2011
(2011-09-01), XP055247537, Retrieved from the
Internet:
URL:http://www.intertronics.co.uk/data/get
ting_to_know_thinky_mixers.pdf [retrieved on
2016-02-04]**

EP 2 874 209 B1

## Description

### Technical Field

The present invention relates to a method for producing a coated active material capable of forming a coating layer while controlling damage to the active material surface.

### Background Art

For example, a lithium battery has been widely put to practical use in the field of information relevant apparatuses and communication apparatuses by reason of having a high electromotive force and a high energy density. On the other hand, the development of an electric automobile and a hybrid automobile has been hastened also in the field of automobiles from the viewpoint of environmental issues and resource problems, and a lithium battery has been studied also as a power source thereof.

Liquid electrolyte containing a flammable organic solvent is used for a presently commercialized lithium battery, so that the installation of a safety device for restraining temperature rise during a short circuit and the improvement in structure and material for preventing the short circuit are necessary therefor. In contrast, a lithium battery all-solidified by replacing the liquid electrolyte with a solid electrolyte layer is conceived to intend the simplification of the safety device and be excellent in production cost and productivity for the reason that the flammable organic solvent is not used in the battery.

In the field of such an all solid state battery, an attempt to intend the performance improvement of the all solid state battery is offered while noticing an interface between an active material and a solid electrolyte. For example, in Patent Literature 1, a lithium secondary battery such that the surface of an active material is partly coated with a lithium ion conductive polymer is disclosed. Also, in Patent Literature 2, an active material containing lithium cobaltate ($LiCoO_3$), in which a coating layer containing lithium niobate ($LiNbO_3$) is formed on at least part of the surface, is disclosed. Patent Literature 3 discloses a method of producing a positive electrode for a solid state secondary battery, including a step of producing a slurry composition for a solid electrolyte layer by kneading solid electrolyte particles, a binder, an organic solvent and optionally another component using a planetary mixer, a ball mill or a bead mill, and coating the slurry composition onto a positive electrode active material layer, followed by drying. Patent Literature 4 discloses a method of producing a positive electrode for a solid state secondary battery, including a step of a preparing a slurry for the positive electrode using a bead mill having beads with a small diameter of 0.3 mm or a planetary mixer manufactured by THINKY. Non-Patent Literature 1 discloses that, in a typical mixing mode of the planetary mixer manufactured by THINKY, the number of rotations is 800 rpm and the number of revolutions is 2000 rpm to provide a mixing force of 400 G.

### Citation List

Patent Literature 1: JP 2002-373643 A
Patent Literature 2: JP 2010-073539 A
Patent Literature 3: WO 2011/105574 A1
Patent Literature 4: US 2011/0053004 A1
Non-Patent Literature 1: "THINKY - An introduction to Planetary Centrifugal Mixers", XP055247537

### Summary of Invention

### Technical Problem

In Patent Literature 1, as opposed to Patent Literatures 3 and 4, a mechanical coating process such as a hybridization method, a mechano-fusion method and a mechanical milling method (for example, planetary ball mill and ball mill) is described as a method for coating the surface of an active material. However, in the case of performing such a mechanical coating process, a crushing medium such as a ball and a blade inevitably collides directly with an active material, so that the problem is to damage the active material surface. Specifically, the problem is that deterioration such as flaw and cracking is caused in a coating layer formed once on an active material, a coating layer is peeled off the surface of an active material, and an active material itself is deteriorated in performance by reason of causing deterioration such as flaw and cracking. The present invention has been made in view of the actual circumstances, and the main object thereof is to provide a method of producing a coated active material capable of forming a coating layer while controlling damage to the active material surface.

Solution to Problem

In order to achieve the object, the present invention provides a method for producing a coated active material as defined in claim 1.

According to the present invention, the coating layer is formed while controlling damage to the active material surface by performing a rotary and revolutionary kneading process for the raw material composition without using a crushing medium. Specifically, deterioration such as cracking may be restrained from occurring in the coating layer, and the coating layer may be restrained from peeling off the surface of the active material. Also, damage on the surface of the active material itself may be restrained. The obtained coated active material has a structure such that the active material and the coating layer containing the sulfide solid electrolyte contact so closely as to exhibit excellent ion conductivity.

In the invention, the average particle diameter of the sulfide solid electrolyte is preferably within a range of 0.7 $\mu$m to 2.4 $\mu$m.

In the invention, the ratio of the average particle diameter of the sulfide solid electrolyte to the average particle diameter of the active material is preferably 0.21 or less.

Advantageous Effects of Invention

The present invention produces the effect such as to allow a coated active material in which a coating layer containing a sulfide solid electrolyte is formed while controlling damage to the active material surface.

Brief Description of Drawings

FIG. 1 is a flow chart showing an example of a method of producing a coated active material of the present invention.

FIG. 2 is an explanatory view explaining the kneading step in the present invention.

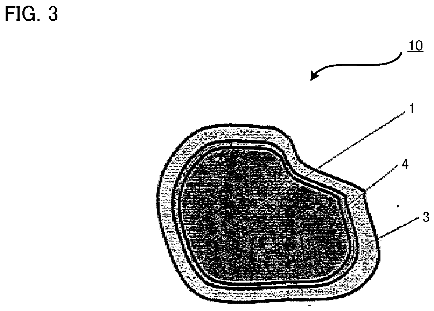

FIG. 3 is a schematic cross-sectional view showing an example of a coated active material obtained in the present invention.

FIGS. 4A to 4E are SEM images of a coated active material each obtained in Examples 1 to 4 and Comparative Example.

FIGS. 5A and 5B are SEM images of a coated active material each obtained in Examples 5 and 6.

FIG. 6 is an SEM image of a cross section of a coated active material obtained in Example 4.

FIG. 7 is a graph showing a 1/3C-CC discharge capacity measurement result in an evaluation battery using a coated active material each obtained in Example 4 and Comparative Example.

Description of Embodiments

A method of producing a coated active material of the present invention is hereinafter described in detail.

The method of producing a coated active material of the present invention is a method of producing a coated active material, the coated active material is provided with an active material and a coating layer containing a sulfide solid electrolyte, comprising the steps of: a preparation step of preparing a raw material composition containing the active material and the sulfide solid electrolyte, and a kneading step of performing a rotary and revolutionary kneading process for the raw material composition without using a crushing medium and forming the coating layer on the surface of the active material.

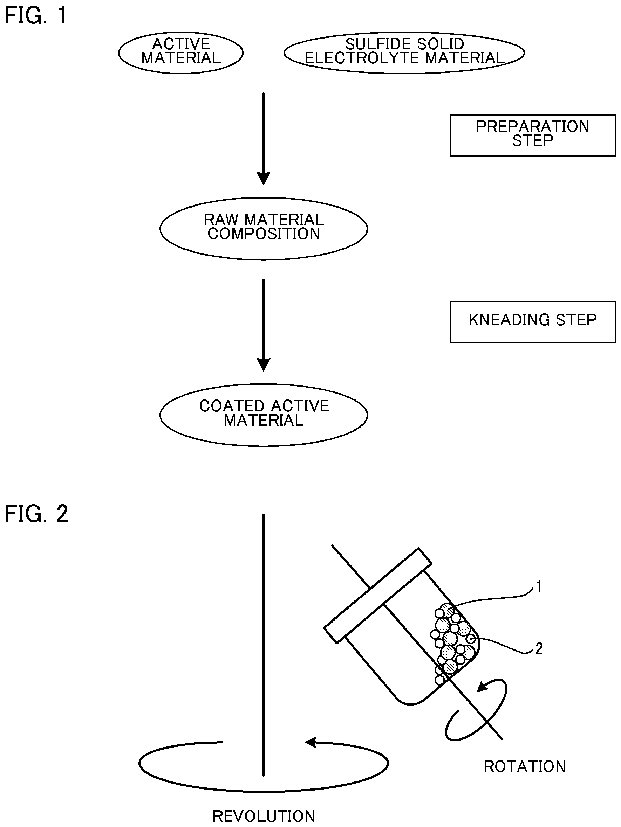

FIG. 1 is a flow chart showing an example of the method of producing a coated active material of the present invention. The method of producing a coated active material shown in FIG. 1 comprises a preparation step of preparing a raw material composition containing the active material and the sulfide solid electrolyte, and a kneading step of performing a rotary and revolutionary kneading process for the raw material composition without using a crushing medium and forming the coating layer on the surface of the active material.

According to the present invention, the coated active material capable of forming the coating layer is obtained while controlling damage to the active material surface by performing a rotary and revolutionary kneading process for the raw material composition, that is, as shown in FIG. 2, kneading a closed vessel in which only the raw material composition (an active material 1 and a sulfide solid electrolyte 2) is sealed while rotating and revolving, without using a crushing medium. Specifically, deterioration such as cracking in the coating layer and peeling of the coating layer off the surface of the active material may be restrained. Also, deterioration on the surface of the active material itself may be restrained. Incidentally, FIG. 2 is an explanatory view explaining the kneading step (the rotary and revolutionary kneading process) in the present invention.

For example, in a mechanical coating process described in Patent Literature 1, the use of a crushing medium such as a ball and a blade brings a high possibility of damaging the active material surface even though the coating layer is formed on the surface of the active material. That is to say, a collision between the coating layer and a crushing medium brings a high possibility of causing deterioration such as cracking in the coating layer and a high possibility of peeling the coating layer off the surface of the active material. Also, a direct collision of the active material itself with a crushing medium brings a high possibility of causing deterioration such as cracking of the surface.

In contrast, in the present invention, the coating layer and a crushing medium have no direct collisions by reason of performing a rotary and revolutionary kneading process for the raw material composition without using a crushing medium. Thus, a possibility of causing deterioration such as flaw and cracking in the coating layer and a possibility of peeling the coating layer off the surface of the active material become extremely low. Also, the active material itself may be restrained from causing deterioration such as cracking due to a direct collision with a crushing medium. Accordingly, the coating layer may be formed while controlling damage to the active material surface.

A mechanism for forming the coating layer in the present invention is guessed as follows. That is to say, in the present invention, it is conceived that the performance of a rotary and revolutionary kneading process allows sufficient collision energy and frictional energy to the raw material composition without using a crushing medium. Thus, it is guessed that the raw material composition rubs together, the sulfide solid electrolyte attaches to the surface of the active material, and the coating layer may be formed while controlling damage to the active material surface. Specifically, the raw material composition is pushed against the outer periphery in the closed vessel by revolving the closed vessel in which the raw material composition is sealed to produce centrifugal force. However, in the case of only centrifugal force by revolution, the active material and the sulfide solid electrolyte contained in the raw material composition are separated in accordance with a difference in mass between themselves. Then, the raw material composition in the closed vessel is sufficiently stirred and mixed by rotating the closed vessel while revolving. As a result, it is conceived that the coated active material for forming the coating layer containing the sulfide solid electrolyte is obtained while controlling damage to the active material surface. Incidentally, in the present invention, the rotary and revolutionary kneading process described above may be performed in a dry type or in a wet type, preferably in a dry type among them. Also, in the present invention, the coating layer may be formed while maintaining the composition ratio of a raw material in the raw material composition, so that lithium ion conductance may be restrained from deteriorating. Also, the present invention has the advantage that coating speed may be quickened as compared with a gas phase method such as PLD.

Here, "without using a crushing medium" in the present invention signifies that a crushing medium is not used on the occasion of subjecting the raw material composition to the rotary and revolutionary kneading process. Incidentally, the crushing medium signifies a general medium for kneading the raw material composition while crushing by kneading together with the raw material composition. A shape thereof is properly selected in accordance with factors such as kinds of the raw material composition, and examples thereof include beads, a ball and a blade. Also, a rigid material is used as a material for the crushing medium from the viewpoint of preventing impurities from mixing in. Specific examples thereof include glass, alumina and zirconia.

The method of producing a coated active material of the present invention is hereinafter described in each constitution.

1. Preparation step

First, a preparation step in the present invention is described. The preparation step in the present invention is a step of preparing a raw material composition containing an active material and a sulfide solid electrolyte.

(1) Sulfide solid electrolyte

The sulfide solid electrolyte used for the present invention is not particularly limited if the sulfide solid electrolyte is such as to contain sulfur and have ion conductivity. The sulfide solid electrolyte has a soft and fragile property as compared with an oxide solid electrolyte, for example. Thus, in the kneading step described later, the sulfide solid electrolyte may attach to the surface of the active material to form a coating layer without requiring large collision energy and frictional energy by a medium. Also, the sulfide solid electrolyte has such a property of small elastic force and frequent plastic deformation that the particle diameter of the sulfide solid electrolyte does not need to be a nanosize necessary for a general particulate.

Examples of the sulfide solid electrolyte in the present invention include $Li_2S-P_2S_5$, $Li_2S-P_2S_5$-LiI, $Li_2S-P_2S_5-Li_2O$, $Li_2S-P_2S_5-Li_2O$-LiI, $Li_2S-SiS_2$, $Li_2S-SiS_2$-LiI, $Li_2S-SiS_2$-LiBr, $Li_2S-SiS_2$-LiCl, $Li_2S-SiS_2-B_2S_3$-LiI, $Li_2S-SiS_2-P_2S_5$-LiI, $Li_2S-B_2S_3$, $Li_2S-P_2S_5-Z_mS_n$ ("m" and "n" are positive numbers, and Z is any of Ge, Zn and Ga), $Li_2S-GeS_2$, $Li_2S-SiS_2-Li_3PO_4$, and $Li_2S-SiS_2-Li_xMO_y$ ("x" and "y" are positive numbers, and M is any of P, Si, Ge, B, Al, Ga and In). Above all, $Li_2S-P_2S_5$ may be suitably used. Incidentally, the description of the "$Li_2S-P_2S_5$" signifies the sulfide solid electrolyte obtained by using $Li_2S$ and $P_2S_5$, and other descriptions signify similarly.

Also, in the case where the sulfide solid electrolyte is obtained by using $Li_2S$ and $P_2S_5$, the ratio of $Li_2S$ to the total of $Li_2S$ and $P_2S_5$ is, for example, preferably within a range of 70 mol% to 80 mol%, more preferably within a range of 72 mol% to 78 mol%, and further more preferably within a range of 74 mol% to 76 mol%. The reason therefor is to allow the sulfide solid electrolyte having an ortho-composition or a composition in the neighborhood of it and allow the sulfide solid electrolyte with high chemical stability. Here, ortho generally signifies oxo acid which is the highest in degree of hydration among oxo acids obtained by hydrating the same oxide. In the present invention, a crystal composition to which $Li_2S$ is added most among sulfides is called an ortho-composition. $Li_3PS_4$ corresponds to the ortho-composition in the $Li_2S$-$P_2S_5$ system. In the case of an $Li_2S$-$P_2S_5$-based sulfide solid electrolyte, the ratio of $Li_2S$ and $P_2S_5$ such as to allow the ortho-composition is $Li_2S : P_2S_5 = 75 : 25$ on a molar basis. Incidentally, also in the case of using $Al_2S_3$ and $B_2S_3$ instead of $P_2S_5$ in the sulfide solid electrolyte, the preferable range is the same. $Li_3AlS_3$ corresponds to the ortho-composition in the $Li_2S$-$Al_2S_3$ system and $Li_3BS_3$ corresponds to the ortho-composition in the $Li_2S$-$B_2S_3$ system.

Also, in the case where the sulfide solid electrolyte is obtained by using $Li_2S$ and $SiS_2$, the ratio of $Li_2S$ to the total of $Li_2S$ and $SiS_2$ is, for example, preferably within a range of 60 mol% to 72 mol%, more preferably within a range of 62 mol% to 70 mol%, and furthermore preferably within a range of 64 mol% to 68 mol%. The reason therefor is to allow the sulfide solid electrolyte having an ortho-composition or a composition in the neighborhood of it and allow the sulfide solid electrolyte with high chemical stability. $Li_4SiS_4$ corresponds to the ortho-composition in the $Li_2S$-$SiS_2$ system. In the case of an $Li_2S$-$SiS_2$-based sulfide solid electrolyte, the ratio of $Li_2S$ and $SiS_2$ such as to allow the ortho-composition is $Li_2S : SiS_2 = 66.7 : 33.3$ on a molar basis. Incidentally, also in the case of using $GeS_2$ instead of $SiS_2$ in the sulfide solid electrolyte, the preferable range is the same. $Li_4GeS_4$ corresponds to the ortho-composition in the $Li_2S$-$GeS_2$ system.

Also, in the case where the sulfide solid electrolyte is obtained by using LiX (X = Cl, Br and I), the ratio of LiX is, for example, preferably within a range of 1 mol% to 60 mol%, more preferably within a range of 5 mol% to 50 mol%, and further more preferably within a range of 10 mol% to 40 mol%. Also, in the case where the sulfide solid electrolyte is obtained by using $Li_2O$, the ratio of $Li_2O$ is, for example, preferably within a range of 1 mol% to 25 mol%, more preferably within a range of 3 mol% to 15 mol%.

The sulfide solid electrolyte in the present invention may be sulfide glass, or crystallized sulfide glass obtained by heat-treating the sulfide glass. The sulfide glass may be obtained by amorphization treatment such as a mechanical milling method and a melt extraction method. On the other hand, the crystallized sulfide glass may be obtained by heat-treating the sulfide glass, for example.

With regard to the sulfide solid electrolyte in the present invention, an average particle diameter thereof ($D_1$) is, for example, preferably 10 $\mu$m or less, more preferably 5.0 $\mu$m or less, particularly preferably 2.4 $\mu$m or less. On the other hand, the average particle diameter $D_1$ is, for example, preferably 0.1 $\mu$m or more, more preferably 0.2 $\mu$m or more, particularly preferably 0.7 $\mu$m or more. The reason therefor is that the case where the average particle diameter $D_1$ is out of the range brings a possibility of being incapable of sufficiently attaching to the surface of the active material in the kneading step described later to form a coating layer with difficulty. Also, the reason therefor is to bring a possibility of not allowing a coating layer having a sufficient coverage factor even though a coating layer is formed on the active material. Here, an average particle diameter ($D_{50}$) of the sulfide solid electrolyte may be measured by a granulometer, for example.

Also, examples of a shape of the sulfide solid electrolyte in the present invention include a particulate shape, preferably a perfectly spherical shape or an elliptically spherical shape, above all. Also, the sulfide solid electrolyte is preferably high in ion conductivity. For example, Li ion conductance at normal temperature is preferably $1 \times 10^{-5}$ S/cm or more, more preferably $1 \times 10^{-4}$ S/cm or more, further more preferably $1 \times 10^{-3}$ S/cm or more.

(2) Active material

The active material used for the present invention is properly selected in accordance with kinds of a conductive ion of a battery for which an intended coated active material is used. For example, in the case where the coated active material obtained by the present invention is used for a lithium battery, the active material occludes and releases a lithium ion. Also, the active material in the present invention may be a cathode active material or an anode active material.

For example, an oxide active material and a sulfide active material may be used as the active material in the present invention; above all, an oxide active material is preferably used. The reason therefor is to allow the coated active material with high energy density. Also, the reason therefor is that an oxide active material is so sufficiently hard as compared with a sulfide active material as to bring a low possibility of causing deterioration in the surface on the occasion of colliding with the sulfide solid electrolyte in the kneading step described later.

Examples of the oxide active material used for the present invention include an oxide active material represented by a general formula $Li_xM_yO_z$ (M is a transition metallic element, x = 0.02 to 2.2, y = 1 to 2 and z = 1.4 to 4). In the above-mentioned general formula, M is preferably at least one kind selected from the group consisting of Co, Mn, Ni, V and Fe, more preferably at least one kind selected from the group consisting of Co, Ni and Mn. Also, an active material represented by a general formula $Li_{1+x}Mn_{2-x-y}M_yO_4$ (M is at least one selected from Al, Mg, Co, Fe, Ni and Zn, $0 \leqq x \leqq$

1, $0 \leqq y \leqq 2$, $0 \leqq x + y \leqq 2$) may be used as the oxide active material. Specific examples thereof include rock salt bed type active materials such as $LiCoO_2$, $LiMnO_2$, $LiNiO_2$, $LiVO_2$ and $LiNi_{1/3}Co_{1/3}Mn_{1/3}O_2$, and spinel type active materials such as $LiMn_2O_4$ and $LiNi_{0.5}Mn_{1.5}O_4$. Also, examples of the oxide active material except the general formula of $Li_xM_yO_z$ include olivine type active materials such as $LiFePO_4$ and $LiMnPO_4$, and oxides such as $Li_4Ti_5O_{12}$, $Nb_2O_5$ and $Fe_2O_3$. Also, Si-containing oxides ($Li_2FeSiO_4$ and $Li_2MnSiO_4$) and Sn-containing oxides may be used as the oxide active material. Also, examples of the sulfide active material used for the present invention include titanium sulfide. In addition, carbon active materials such as graphite carbon and amorphous carbon, and metal active materials such as silicon and Sn may be used as the active material in the present invention.

With regard to the active material in the present invention, an average particle diameter thereof ($D_2$) is preferably 10 $\mu$m or less, more preferably within a range of 1.0 $\mu$m to 6.0 $\mu$m, particularly preferably within a range of 4 $\mu$m to 5 $\mu$m. Here, an average particle diameter ($D_{50}$) of the active material may be measured by a granulometer, for example.

In the present invention, a ratio ($D_1/D_2$) of the average particle diameter ($D_1$) of the sulfide solid electrolyte to the average particle diameter ($D_2$) of the active material is, for example, preferably 1.00 or less, more preferably 0.21 or less, particularly preferably within a range of 0.01 to 0.20.

Also, in the present invention, the average particle diameter ($D_1$) described above of the sulfide solid electrolyte and the average particle diameter ratio ($D_1/D_2$) are not particularly limited if the average particle diameter and the average particle diameter ratio are within the predetermined ranges, but specifically $D_1$ is preferably 2.4 $\mu$m or less and $D_1/D_2$ is preferably 0.21 or less. The reason therefor is to allow a coating layer to be favorably formed on the active material.

Also, with regard to the active material in the present invention, a resistive layer formation constraining coat layer for constraining a reaction between the active material and the sulfide solid electrolyte is preferably formed on the surface thereof. It is conceived that the sulfide solid electrolyte reacts with the active material so easily as to form a high resistive layer at an interface with the active material and cause interface resistance, when the sulfide solid electrolyte is directly coated on the surface of the active material. In contrast, the formation of the resistive layer formation constraining coat layer constrains a high resistive layer from being formed at an interface between the active material and the sulfide solid electrolyte, and allows interface resistance to be reduced. Thus, in the case of producing a battery by using the coated active material obtained in the present invention, output reduction of the battery may be constrained. Incidentally, the formation of a high resistive layer may be confirmed by a transmission electron microscope (TEM) and an energy-dispersive X-ray spectroscopy (EDX).

Examples of the resistive layer formation constraining coat layer include a layer comprising an oxide. The oxide is not particularly limited if the oxide has ion conductivity and may constrain interface resistance from increasing between the active material and the sulfide solid electrolyte. In the case where the coated active material obtained by the present invention is used for a lithium battery, the oxide is not particularly limited if the oxide has lithium ion conductivity, but preferably has a Li element, an A element and an O element. The A element is not particularly limited but examples thereof include Nb, P, B, Si, Ge, Ti and Zr. Specific examples of such an oxide include $LiNbO_3$, $Li_3PO_4$, $Li_3BO_3$, $Li_4SiO_4$, $Li_4GeO_4$, $LiTiO_3$ and $Li_2ZrO_3$. Also, the resistive layer formation constraining coat layer may comprise a composite compound of the oxide described above, and examples of such a composite compound include $Li_3BO_3$-$Li_4SiO_4$, $Li_3PO_4$-$Li_4SiO_4$ and $Li_3PO_4$-$Li_4GeO_4$.

An average layer thickness of the resistive layer formation constraining coat layer is not particularly limited if the thickness is such that the active material and the sulfide solid electrolyte do not react to cause interface resistance, but is, for example, preferably within a range of 1 nm to 500 nm, more preferably within a range of 2 nm to 100 nm. The reason therefor is that the case where the average layer thickness is less than the range brings a possibility that the active material and the sulfide solid electrolyte react to cause interface resistance. On the other hand, the reason therefor is that the case where the average layer thickness exceeds the range brings a possibility of deteriorating ion conductivity. Also, the reason therefor is that on the occasion of using the coated active material obtained in the present invention for a battery, an interparticle distance of the active material becomes large and packing density of the active material decreases, so as to bring a possibility that high discharge capacity is not obtained. Incidentally, the average layer thickness of the resistive layer formation constraining coat layer may be measured by using a transmission electron microscope (TEM).

Also, the resistive layer formation constraining coat layer preferably covers more areas of the surface of the active material, and the specific coverage factor is, for example, preferably 40% or more, more preferably 70% or more, further more preferably 90% or more, and particularly preferably covers the whole surface of the active material. Incidentally, examples of a measuring method for the coverage factor of the resistive layer formation constraining coat layer include transmission electron microscope (TEM) and X-ray photoelectron spectroscopy (XPS).

Examples of a method for forming the resistive layer formation constraining coat layer on the surface of the active material include a tumbling flow coating method (a sol-gel method), a mechano-fusion method, a CVD method and a PVD method. Also, for example, in the case of forming the resistive layer formation constraining coat layer by using a tumbling flow coating method, specifically, a coating solution for forming the coat layer is prepared, applied and dried on the active material surface. On this occasion, intake-air temperature is, for example, preferably 50°C or more.

The reason therefor is that the intake-air temperature less than the range slows down volatilization rate of a solvent in the coating solution for forming the coat layer.

(3) Raw material composition

The raw material composition in the present invention is not particularly limited if the raw material composition contains at least the active material and the sulfide solid electrolyte. The content of the active material in the raw material composition varies in accordance with the composition of an intended coated active material, and the ratio of the active material to the total of the active material and the sulfide solid electrolyte is, for example, preferably within a range of 10% by mass to 99% by mass, more preferably within a range of 20% by mass to 90% by mass. The reason therefor is that the case where the content is less than the range brings a possibility of being incapable of sufficiently intending to improve energy density. On the other hand, the reason therefor is that the case where the content exceeds the range brings a possibility of being incapable of sufficiently securing an ion conduction path.

The raw material composition in the present invention may contain a conductive assistant except the active material and the sulfide solid electrolyte. The reason therefor is to allow electron conductivity of the obtained coated active material to be improved. The conductive assistant is not particularly limited but examples thereof include carbon materials such as multilayer carbon nanotube, mesocarbon microbeads (MCMB), acetylene black, Ketjen Black, carbon black, coke, vapor phase grown carbon and graphite, and metal materials such as Ti, Al and SUS, which are small in reactivity with the sulfide solid electrolyte.

2. Kneading step

Next, a kneading step in the present invention is described. The kneading step in the present invention is a step of performing a rotary and revolutionary kneading process for the above-mentioned raw material composition without using a crushing medium and forming the coating layer on the surface of the active material.

(1) Rotary and revolutionary kneading process

The rotary and revolutionary kneading process in the present invention is a process of kneading a closed vessel, in which the raw material composition is sealed, by revolving while rotating without using a crushing medium. Thus, collision energy and frictional energy become so small as compared with a conventional kneading process using a crushing medium that the coating layer may be formed while controlling damage to the active material surface. Specifically, deterioration such as cracking caused in the coating layer and peeling off the surface of the active material may be restrained. Also, deterioration such as cracking on the surface of the active material itself may be restrained.

The collision energy and frictional energy in the rotary and revolutionary kneading process are preferably such as not to damage the active material surface and such as to allow the coating layer containing the sulfide solid electrolyte to be formed on the surface of the active material without using a crushing medium. Also, in the rotary and revolutionary kneading process, centrifugal acceleration is caused by revolving while rotating. The centrifugal acceleration is within a range of 350 G to 500 G, preferably within a range of 400 G to 450 G. The reason therefor is that the case where the centrifugal acceleration is less than the range brings a possibility of not allowing sufficient collision energy and frictional energy to the raw material composition. Specifically, the raw material composition does not sufficiently rub together, and there is a possibility that the sulfide solid electrolyte attaches to the surface of the active material with such difficulty that the coating layer is formed with difficulty. On the other hand, the reason therefor is that the case where the centrifugal acceleration exceeds the range brings a possibility that collision energy and frictional energy allowed to the raw material composition become too large. Specifically, the reason therefor is that there are a possibility of causing deterioration such as cracking in the coating layer formed on the surface of the active material and a possibility of peeling the coating layer off the surface of the active material, and a possibility of causing deterioration on the surface of the active material itself. Incidentally, the centrifugal acceleration (G) may be obtained from the following expression by using radius of gyration r (cm) and number of revolutions N (rpm).

$$\mathtt{Centrifugal~acceleration~=~r~\times~(2\pi N/60)^2/980.665}$$

The number of rotations and revolutions in the rotary and revolutionary kneading process are properly determined in accordance with the magnitude of collision energy and frictional energy allowed to the raw material composition, and are not particularly limited if the number allows collision energy and frictional energy such as to allow the coating layer to be formed without deteriorating the surface of the active material. Specifically, the number of rotations in the present invention is, for example, preferably 500 rpm or more, more preferably 600 rpm or more, further more preferably within a range of 800 rpm to 2000 rpm. The reason therefor is that the case where the number of rotations is less than the range brings a possibility that the raw material composition is not sufficiently kneaded and the coating layer is not formed on the surface of the active material. On the other hand, the reason therefor is that the case where the number of rotations exceeds the range brings a possibility that collision energy and frictional energy allowed to the raw material composition become too large and the coating layer causes deterioration such as cracking and peeling off the active material. Also, the reason therefor is to cause deterioration of the surface of the active material itself.

Also, the number of revolutions in the present invention is, for example, preferably 1000 rpm or more, more preferably 1500 rpm or more, further more preferably within a range of 1600 rpm to 3000 rpm. The reason therefor is that the case where the number of revolutions is less than the range brings a possibility that the raw material composition is not sufficiently kneaded and the coating layer is not formed on the surface of the active material. On the other hand, the reason therefor is that the case where the number of revolutions exceeds the range brings a possibility that collision energy and frictional energy allowed to the raw material composition become too large and the coating layer causes deterioration such as cracking and peeling off the active material. Also, the reason therefor is to cause deterioration of the surface of the active material itself.

In the rotary and revolutionary kneading process, the ratio of the number of rotations to the number of revolutions (the number of rotations / the number of revolutions) is, for example, preferably 0.2 or more, more preferably 0.3 or more, further more preferably within a range of 0.4 to 1.0. The determination of such a ratio of the numbers allows a favorable coating layer to be formed on the surface of the active material.

The time for performing the rotary and revolutionary kneading process in the present invention is not particularly limited but is, for example, preferably 5 minutes or more, more preferably 10 minutes or more, further more preferably within a range of 15 minutes to 120 minutes. The reason therefor is that too short time for performing the rotary and revolutionary kneading process brings a possibility that the raw material composition is not sufficiently kneaded and the coating layer is not sufficiently formed on the surface of the active material. On the other hand, the reason therefor is that too long time for performing the rotary and revolutionary kneading process brings a possibility of causing deterioration such as cracking in the formed coating layer and a possibility of peeling the coating layer off the surface of the active material. Also, the reason therefor is to bring a possibility of causing deterioration such as cracking on the surface of the active material itself.

The rotary and revolutionary kneading process in the present invention may be performed in a dry type or in a wet type, preferably in a dry type among them. The coating layer may be formed while maintaining the composition ratio of a raw material in the raw material composition, so that lithium ion conductance may be restrained from deteriorating. Also, coating speed may be quickened as compared with a gas phase method such as PLD.

(2) Coated active material

The coated active material obtained in the present invention is such that the coating layer containing the sulfide solid electrolyte is formed on the surface of the active material. In the present invention, the coating layer may be formed while controlling damage to the active material surface. Thus, with regard to the structure, the active material and the coating layer containing the sulfide solid electrolyte contact so closely as to allow the coated active material having excellent ion conductivity. Also, in the case of producing a solid state battery by using the coated active material obtained in the present invention, the high-output and high-capacity battery may be obtained. Here, the active material and the sulfide solid electrolyte are the same as the "1. Preparation step"; therefore, the description herein is omitted.

The coating layer in the present invention contains the sulfide solid electrolyte described above, and may be composed of only the sulfide solid electrolyte, or contain another constituent (such as a conductive assistant). Incidentally, the conductive assistant is the same as the "1. Preparation step"; therefore, the description herein is omitted.

The coverage factor of the coating layer in the present invention is, for example, preferably 30% or more, more preferably 50% or more, further more preferably 70% or more, and particularly preferably covers the whole surface of the active material. The reason therefor is that the case where the coverage factor is less than the range brings a possibility that a portion in which the coating layer is not formed increases on the surface of the active material and resistance due to ion conduction increases in the uncoated portion. Incidentally, with regard to a measuring method for the coverage factor, for example, the coverage factor may be determined by performing ultimate analysis of the surface of the coated active material. Specifically, the coverage factor may be determined by measuring a ratio of each element to divide the sum of elements contained in the coating layer by the sum of elements contained in the coating layer and the active material. Examples of the ultimate analysis method include X-ray photoelectron spectroscopy (XPS), Auger electron spectroscopy and glow discharge emission spectroscopy (GD-OES).

The average layer thickness of the coating layer in the present invention is, for example, preferably 1000 nm or less, more preferably within a range of 50 nm to 1000 nm, further more preferably within a range of 100 nm to 900 nm, and particularly preferably within a range of 200 nm to 800 nm. The reason therefor is that the case where the average layer thickness is too larger than the range brings a possibility that in the case of producing a solid state battery by using the obtained coated active material, the active materials contacting with each other through the coating layer may not be uniformly disposed at a proper interparticle distance with favorable accuracy, and packing density of the active material decreases, so that high discharge capacity is not obtained. On the other hand, the reason therefor is that the case where the average layer thickness is too smaller than the range brings a possibility of deteriorating ion conductivity.

The present invention may also provide a method of producing a solid state battery using the coated active material described above. Specifically, the method of producing a solid state battery is a method of producing a solid state battery integrating a cathode layer containing a cathode active material, an anode layer containing an anode active material, and a solid electrolyte layer formed between the cathode layer and the anode layer, characterized in that at least one of the cathode layer and the anode layer contains the coated active material described above. Also, the coated active material described above may be contained in the cathode layer or the anode layer, preferably in the cathode layer among them. The reason therefor is to allow the solid state battery exhibiting more excellent battery characteristics.

The cathode layer in the solid state battery is not particularly limited if the cathode layer contains a cathode active material, but preferably contains the coated active material described above. The cathode layer may be composed of only a cathode active material, or further contain at least one of a conductive assistant and a binder as required. Examples of the binder include fluorine-containing binders such as PTFE and PVDF. Examples of the conductive assistant include carbon materials such as multilayer carbon nanotube, mesocarbon microbeads (MCMB), acetylene black, Ketjen Black, carbon black, coke, vapor phase grown carbon and graphite, and metal materials such as Ti, Al and SUS, which are small in reactivity with the sulfide solid electrolyte. Also, the cathode layer may contain a solid electrolyte, preferably the sulfide solid electrolyte described in the item of "1. Preparation step".

The thickness of the cathode layer is, for example, preferably within a range of 0.1 $\mu$m to 1000 $\mu$m, more preferably within a range of 1 $\mu$m to 100 $\mu$m. Examples of a method for forming such a cathode layer include a method for compression-forming a cathode layer forming material containing a cathode active material.

Also, the solid electrolyte layer in the solid state battery using the coated active material described above is not particularly limited if the solid electrolyte layer contains at least a solid electrolyte, but preferably contains the sulfide solid electrolyte described in the "1. Preparation step". The solid electrolyte layer may be composed of only a solid electrolyte, or contain another constituent (such as a binder) as required. Incidentally, the same as the cathode layer may be used for the binder. Also, the thickness of the solid electrolyte layer may be properly determined in accordance with an intended battery, preferably within a range of 2 $\mu$m to 1000 $\mu$m, for example. Examples of a method for forming such a solid electrolyte layer include a method for compression-forming a solid electrolyte layer forming material containing a solid electrolyte.

Also, the anode layer in the solid state battery using the coated active material described above is not particularly limited if the anode layer contains an anode active material, but preferably contains the coated active material described above. The anode layer may be composed of only an anode active material, or further contain at least one of a solid electrolyte, a conductive assistant and a binder as required. The solid electrolyte is preferably the sulfide solid electrolyte described in the "1. Preparation step". Also, the same as the cathode layer may be used for the conductive assistant and the binder.

The thickness of the anode layer is, for example, preferably within a range of 0.1 $\mu$m to 1000 $\mu$m, more preferably within a range of 1 $\mu$m to 100 $\mu$m. Examples of a method for forming such an anode layer include a method for compression-forming an anode layer forming material containing an anode active material.

Also, a method of producing the solid state battery may comprise a cathode current collector forming step of forming a cathode current collector for collecting a cathode layer, or an anode current collector forming step of forming an anode current collector for collecting an anode layer. Examples of a material for the cathode current collector include SUS, aluminum, nickel, iron, titanium and carbon. Also, examples of a material for the anode current collector include SUS, copper, nickel and carbon. Factors such as the thickness and shape of the cathode current collector and the anode current collector are preferably selected properly in accordance with uses of the battery. Also, a method of producing the solid state battery may comprise a sealing step of sealing a power generating element composed of the cathode layer, solid electrolyte layer and anode layer described above into a battery case. A general battery case may be used for the battery case. Also, with regard to a method of producing the solid state battery, for example, the power generating element may be formed inside an insulating ring.

Also, examples of kinds of the obtained solid state battery include a lithium solid state battery, a sodium solid state battery, a magnesium solid state battery and a calcium solid state battery; above all, preferably a lithium solid state battery. Also, the solid state battery may be a primary battery or a secondary battery, preferably a secondary battery among them. The reason therefor is to be repeatedly charged and discharged and be useful as a car-mounted battery, for example. Also, examples of the shape of the battery include a coin shape, a laminate shape, a cylindrical shape and a rectangular shape.

Incidentally, the present invention is not limited to the above-mentioned embodiments. The above-mentioned embodiments are exemplification, and any is included in the technical scope of the present invention if it has substantially the same constitution as the technical idea described in the claim of the present invention and offers similar operation and effect thereto.

EXAMPLES

The present invention is described more specifically while showing examples hereinafter.

[Example 1]

(Preparation of active material)

First, 10.83 g of ethoxylithium (manufactured by Kojundo Chemical Lab. Co., Ltd.) and 66.27 g of pentaethoxyniobium (manufactured by Kojundo Chemical Lab. Co., Ltd.) were mixed into 500 g of ethanol (manufactured by Wako Pure Chemical Industries, Ltd.) so as to be Li : Nb = 1 : 1 at molar ratio to prepare a coating solution for forming a resistive layer formation constraining coat layer. Next, the coating solution for forming a resistive layer formation constraining coat layer was applied on 500 g of a cathode active material ($LiNi_{1/3}Co_{1/3}Mn_{1/3}O_2$) by a coating apparatus using a tumbling flow bed layer (manufactured by Powrex Corp.), and dried at an intake air temperature of 50°C to thereby form the resistive layer formation constraining coat layer containing $LiNbO_3$ with an average layer thickness of 7 nm. Thus, an active material on whose surface the resistive layer formation constraining coat layer was formed was obtained.

(Preparation of sulfide solid electrolyte)

First, lithium sulfide ($Li_2S$) and diphosphorus pentasulfide ($P_2S_5$) were used as a starting material. These powders were weighed in a glove box under an Ar atmosphere (dew point temperature: -70°C) so as to become a molar ratio of $Li_2S : P_2S_5$ = 75 : 25, and mixed by an agate mortar. Next, the obtained mixture was projected into a 45-ml zirconia pot, and zirconia ball ( $\phi$ = 10 mm, 10 pieces) was further projected thereinto to hermetically seal the pot completely (Ar atmosphere). This pot was mounted on a planetary ball milling machine (P7™ manufactured by FRITSCH JAPAN CO., LTD.) to perform mechanical milling for 40 hours at the number of soleplate revolutions of 370 rpm and then obtain $75Li_2S-25P_2S_5$.

(Production of coated active material)

First, the active material (an average particle diameter of 11.5 $\mu$m), on which the resistive layer formation constraining coat layer was formed, and a sulfide solid electrolyte (an average particle diameter of 0.8 $\mu$m) were sealed in a closed vessel. On this occasion, a crushing medium was not sealed. Next, the closed vessel was revolved (the number of revolutions of 2000 rpm) while rotated (the number of rotations of 800 rpm) for one minute by using a rotary and revolutionary kneading apparatus. Thus, a coated active material, in which a coating layer containing the sulfide solid electrolyte was formed on the surface of the active material, was obtained.

[Examples 2 to 6 and Comparative Example]

A coated active material was obtained in each example in the same manner as Example 1 except for modifying each of the average particle diameter of the sulfide solid electrolyte and the time for performing the rotary and revolutionary kneading process as shown in Table 1.

[Table 1]

| | Average Particle Diameter of Sulfide Solid Electrolyte ($D_1$) | Average Particle Diameter of Active Material ($D_2$) | Average Particle Diameter Ratio ($D_1/D_2$) | Rotary and Revolutionary Kneading Process Time |
|---|---|---|---|---|
| Example 1 | 0.8 $\mu$m | | 0.07 | 1 minute |
| Example 2 | 0.8 $\mu$m | | 0.07 | 5 minutes |
| Example 3 | 0.8 $\mu$m | 11.5 $\mu$m | 0.07 | 10 minutes |
| Example 4 | 0.8 $\mu$m | | 0.07 | 20 minutes |
| Example 5 | 1.5 $\mu$m | | 0.13 | 20 minutes |
| Example 6 | 2.5 $\mu$m | | 0.2 | 20 minutes |
| Comparative Example | 0.8 $\mu$m | | 0.07 | |

[Evaluations 1]

(Aspect observation of coated active material surface)

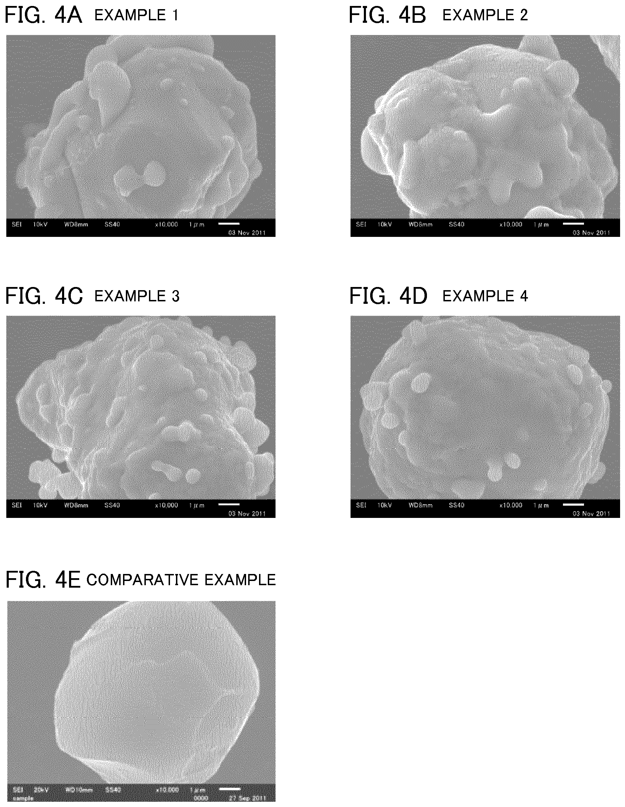

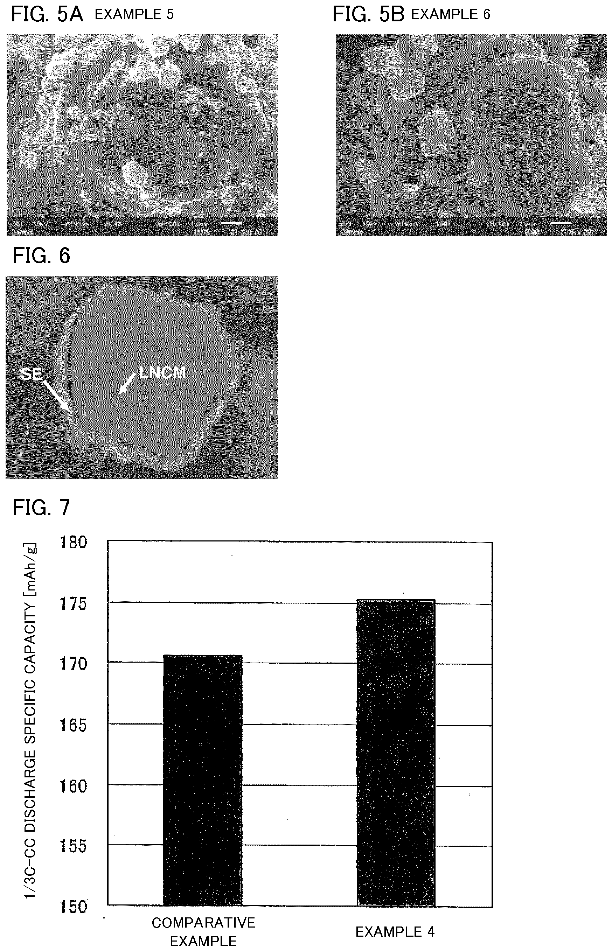

With regard to an aspect of each of the coated active material surface obtained in Examples 1 to 4 and Comparative Example, a sample such that the powder of the coated active material was scattered was observed by a scanning electron microscope (SEM). The result is shown in FIGS. 4A to 4E. Also, Examples 5 and 6 were observed similarly. The result is shown in FIGS. 5A and 5B.

As shown in Table 1 and FIGS. 4A to 4E, it can be confirmed that longer time for performing the rotary and revolutionary kneading process promotes the formation of the coating layer on the surface of the active material to bring higher coverage factor. Also, as shown in Table 1 and FIGS. 4 and 5, the formation of the coating layer can be confirmed in each of Examples 4 to 6. Above all, in Examples 4 and 5 such that the average particle diameter of the sulfide solid electrolyte is within a range of 0.7 $\mu$m to 2.4 $\mu$m, it can be confirmed that the coating layer is stuck and formed more easily to bring higher coverage factor as compared with Example 6 such that the average particle diameter is 2.5 $\mu$m.

(Aspect observation of coated active material cross section)

With regard to an aspect of the coated active material cross section obtained in Example 4, a sample such that the powder of the coated active material was subject to cross-sectional working was observed by a scanning electron microscope (SEM). The result is shown in FIG. 6.

As shown in FIG. 6, it can be confirmed that the coating layer is formed on the whole surface of the active material. Also, it can be confirmed that the formed coating layer has no grain boundaries. Thus, the present invention suggested that the sulfide solid electrolyte might bond to each other to form the coating layer with no grain boundaries.

(Coverage factor)

The surface of the coated active material particles obtained in Example 4 was subject to ultimate analysis. The coverage factor was calculated by measuring a ratio of each element to divide the sum of elements contained in the coating layer by the sum of elements contained in the coating layer and the active material. As a result, the coverage factor of the coated active material obtained in Example 4 was 99.2%.

[Evaluations 2]

(Production of evaluation battery)

A power generating element of an evaluation battery comprising a cathode layer / a solid electrolyte layer / an anode layer was produced. The cathode layer contains the coated active material each obtained in Example 4 and Comparative Example and the sulfide solid electrolyte so as to be coated active material : sulfide solid electrolyte = 6 : 4 (volume ratio), and contains a conductive assistant (VGCF) so as to be 3% by mass with respect to the coated active material. Also, the solid electrolyte layer is a layer (a thickness of 20 $\mu$m) comprising the sulfide solid electrolyte. In addition, the anode layer contains the anode active material and the sulfide solid electrolyte so as to be anode active material : sulfide solid electrolyte = 5 : 5 (volume ratio). The evaluation battery was obtained by using this power generating element.

With the use of the evaluation battery with the constitution, a current value such as to charge and discharge a capacity calculated from mass of the contained coated active material in 3 hours was defined as 1/3 to measure charge and discharge capacity. The result is shown in FIG. 7. As shown in FIG. 7, in the evaluation battery of Example 4, it can be confirmed that the discharge capacity increased as compared with the evaluation battery of Comparative Example.

Reference Signs List

1 Active material
2 Sulfide solid electrolyte
3 Coating layer
4 Resistive layer formation constraining coat layer
10 Coated active material

**Claims**

1. A method for producing a coated active material, the coated active material being provided with an active material and a coating layer containing a sulfide solid electrolyte, said method comprising the steps of:

   a preparation step of preparing a raw material composition containing the active material and the sulfide solid electrolyte, and
   a kneading step of rotating and revolving a closed vessel having only the raw material composition and forming the coating layer on a surface of the active material,
   wherein a centrifugal acceleration caused by the rotating and revolving is within a range of 350 G to 500 G.

2. The method for producing a coated active material according to claim 1, wherein an average particle diameter of the sulfide solid electrolyte is within a range of 0.7 $\mu$m to 2.4 $\mu$m.

3. The method for producing a coated active material according to claim 1 or 2, wherein a ratio of the average particle diameter of the sulfide solid electrolyte to an average particle diameter of the active material is 0.21 or less.

4. The method for producing a coated active material according to any one of claims 1 to 3, wherein the number of rotations is within a range of 800 rpm to 2000 rpm, and the number of revolutions is 1000 rpm or more.

5. The method for producing a coated active material according to any one of claims 1 to 4, wherein a coverage factor of the coating layer is 50% or more.

6. The method for producing a coated active material according to any one of claims 1 to 5, wherein a ratio of the number of rotations to the number of revolutions is within a range of 0.4 to 1.0.

**Patentansprüche**

1. Verfahren zur Herstellung eines beschichteten Aktivmaterials, wobei das beschichtete Aktivmaterial mit einem Aktivmaterial und einer Beschichtungslage, die Sulfid-Festelektrolyt enthält, versehen ist und das Verfahren die folgenden Schritte umfasst:

   einen Anfertigungsschritt, in dem eine Ausgangsmaterialzusammensetzung angefertigt wird, die das Aktivmaterial und den Sulfid-Festelektrolyt enthält, und
   einen Knetschritt, in dem ein geschlossener Behälter mit nur der Ausgangsmaterialzusammensetzung rotieren und umlaufen gelassen wird und auf einer Oberfläche des Aktivmaterials die Beschichtungslage ausgebildet wird,
   wobei eine Zentrifugalbeschleunigung, die durch das Rotieren und Umlaufen hervorgerufen wird, in einem Bereich von 350 G bis 500 G liegt.

**2.** Verfahren zur Herstellung eines beschichteten Aktivmaterials nach Anspruch 1, wobei ein mittlerer Partikeldurchmesser des Sulfid-Festelektrolyten in einem Bereich von 0,7 $\mu$m bis 2,4 $\mu$m liegt.

**3.** Verfahren zur Herstellung eines beschichteten Aktivmaterials nach Anspruch 1 oder 2, wobei ein Verhältnis des mittleren Partikeldurchmessers des Sulfid-Festelektrolyten zu einem mittleren Partikeldurchmesser des Aktivmaterials 0,21 oder weniger beträgt.

**4.** Verfahren zur Herstellung eines beschichteten Aktivmaterials nach einem der Ansprüche 1 bis 3, wobei die Rotationsfrequenz in einem Bereich von 800 U/min bis 2000 U/min liegt und die Umlauffrequenz in einem Bereich von 1000 U/min oder mehr liegt.

**5.** Verfahren zur Herstellung eines beschichteten Aktivmaterials nach einem der Ansprüche 1 bis 4, wobei ein Bedeckungsfaktor der Beschichtungslage 50% oder mehr beträgt.

**6.** Verfahren zur Herstellung eines beschichteten Aktivmaterials nach einem der Ansprüche 1 bis 5, wobei ein Verhältnis der Rotationsfrequenz zur Umlauffrequenz in einem Bereich von 0,4 bis 1,0 liegt.

## Revendications

**1.** Procédé de fabrication d'un matériau actif revêtu, dans lequel le matériau actif revêtu est muni d'un matériau actif et d'une couche de revêtement qui contient un électrolyte solide au sulfure, ledit procédé comprenant les étapes suivantes :

une étape de préparation qui consiste à élaborer une composition de matière première qui contient le matériau actif et l'électrolyte solide au sulfure, et
une étape de malaxage qui consiste à faire tourner un récipient fermé qui possède seulement la composition de matière première, et à former la couche de revêtement sur une surface du matériau actif,
dans lequel une accélération centrifuge provoquée par la rotation est comprise entre 350 G et 500 G.

**2.** Procédé de fabrication d'un matériau actif revêtu selon la revendication 1, dans lequel un diamètre moyen de particules de l'électrolyte solide au sulfure est compris entre 0,7 $\mu$m et 2,4 $\mu$m.

**3.** Procédé de fabrication d'un matériau actif revêtu selon la revendication 1 ou 2, dans lequel un rapport entre le diamètre moyen de particules de l'électrolyte solide au sulfure et un diamètre moyen de particules du matériau actif est de 0,21 ou moins.

**4.** Procédé de fabrication d'un matériau actif revêtu selon l'une quelconque des revendications 1 à 3, dans lequel le nombre de rotations est compris entre 800 tr/min et 2 000 tr/min, et le nombre de révolutions est de 1 000 tr/min ou plus.

**5.** Procédé de fabrication d'un matériau actif revêtu selon l'une quelconque des revendications 1 à 4, dans lequel un facteur de couverture de la couche de revêtement est de 50 % ou plus.

**6.** Procédé de fabrication d'un matériau actif revêtu selon l'une quelconque des revendications 1 à 5, dans lequel un rapport entre le nombre de rotations et le nombre de révolutions est compris entre 0,4 et 1.

FIG. 1

FIG. 2

FIG. 3

FIG. 4A EXAMPLE 1

FIG. 4B EXAMPLE 2

FIG. 4C EXAMPLE 3

FIG. 4D EXAMPLE 4

FIG. 4E COMPARATIVE EXAMPLE

FIG. 5A EXAMPLE 5

FIG. 5B EXAMPLE 6

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002373643 A
- JP 2010073539 A
- WO 2011105574 A1
- US 20110053004 A1